# EUROPÄISCHE PATENTSCHRIFT

(11) **EP 0 676 550 B1**
(45) Veröffentlichungstag und Bekanntmachung des Hinweises auf die Patenterteilung: **16.12.1998**
(21) Anmeldenummer: 95250039.5
(22) Anmeldetag: 14.02.1995
(51) Int. Cl.: F15B 15/28

(54) **Arbeitszylinder**
Power cylinder
Cylindre de travail

(30) Priorität: 09.03.1994 DE 4408639
(43) Veröffentlichungstag der Anmeldung: 11.10.1995
(73) Patentinhaber: MANNESMANN Aktiengesellschaft, 40213 Düsseldorf (DE)
(72) Erfinder: Meyer, Ernst-August, D-30974 Wennigsen (DE)
(74) Vertreter: Meissner, Peter E., Dipl.-Ing.

(56) Entgegenhaltungen:
- EP-A- 0 212 421
- EP-A- 0 559 634
- DE-A- 3 803 268
- GB-A- 2 230 385
- GB-A- 2 252 793

## Beschreibung

Die Erfindung betrifft einen Arbeitszylinder mit einem Zylindergehäuseprofil gemäß dem Oberbegriff des Patentanspruchs 1.

Arbeitszylinder dieser Art sind vielfach bekannt. Das Zylindergehäuseprofil eines solchen bekannten Arbeitszylinders ist mit Zylinderdeckeln verschlossen. Die Beaufschlagung des Kolbens erfolgt dabei über Druckmittel, d. h. entweder pneumatisch oder hydraulisch. Der Kolben selbst ist entweder mit einer Kolbenstange verbunden, die abgedichtet nach außen geführt wird und an der die Bewegung abgegriffen werden kann, oder die ganze Anordnung ist als kolbenstangenloser Arbeitszylinder ausgebildet (Zugbandzylinder).

Bei Kolbenstangenzylindern ist es bekannt, die Kolbenposition von außen über Sensorelemente abzufragen. Dies kann entweder über induktive Näherungsschalter, oder einfach über sogenannte Reedschalter erfolgen. Die Anforderung an Reedschalter oder andere Sensoren ist, nicht die Position des Kolbens kontinuierlich über den gesamten Verfahrweg bestimmen zu können, sondern elektrische Steuersignale nur dann zu erhalten, wenn der Kolben bestimmte einstellbare Schaltpunkte erreicht. Dies können entweder die Endlagen des Kolbenverschiebehubes sein, oder es können Schaltpunkte sein, die erst beim Einsatz des Arbeitszylinders im Hinblick auf spezifische Arbeitsstellungen entstehen. Daher werden solche Sensorelemente am Außenumfang des Zylindergehäuseprofiles verschieblich geführt angeordnet. Eine bekannte Ausführung ist die, daß die Zuganker, mit denen die Zylinderdeckel miteinander verbunden werden, als Führungsprofile, auf denen die Sensorelemente verschieblich angeordnet sind, benutzt werden. Nachteilig ist dabei, daß diese Sensorelemente bewirken, daß der Arbeitszylinder bzw. das Zylindergehäuseprofil an der Außenhaut nicht mehr geschlossen ist, sondern eine mehr oder weniger zerklüftete Oberfläche bildet. Dies führt dazu, daß im Einsatzfall entweder die Sensorelemente beschädigt werden, oder dieselben extrem verschmutzen. Ferner kommt hinzu, daß die Führungselemente, wie im beschriebenen Fall die Zuganker, ebenfalls derart verschmutzen, daß die Sensorelemente nach einer entsprechenden Gebrauchszeit des Arbeitszylinders festsitzen und kaum mehr verschiebbar sind. Weitere Ausführungen hierzu sind bekannt, bei denen am Zylindergehäuseprofil außen eine Nut eingelassen ist, in welche Sensorelemente einbringbar sind, die mit einem entsprechenden Führungselement (Schwalbenschwanz) versehen sind. Auch hierbei ergibt sich, daß nachteiligerweise die Sensorelemente an der Außenhaut des Zylindergehäuseprofiles vorstehen und somit zerstörungsgefährdet sind, und auch hierbei eine Verschmutzung von außen nicht vermieden wird.

Aus der EP-A-0 212 421 ist ein druckmittelbeaufschlagbarer Zylinder bekannt, mit einem Zylinderrohr mit im wesentlichen ovalen Innenquerschnitt. In dem zum großen Krümmungsradius des Innenquerschnittes gehörenden Mantelabschnitt des Zylinderrohres ist wenigstens ein parallel zur Zylinderachse verlaufender Kanal angeordnet, der zur Unterbringung von die Kolbenstellung abtastenden Schaltelementen dienen kann.

Der Erfindung liegt daher die Aufgabe zugrunde, einen Arbeitszylinder mit einem Zylindergehäuseprofil der gattungsgemäßen Art derart weiterzubilden, daß eine Verschmutzung der Führungsbahnen für die Sensorelemente vermieden wird, und daß durch die Verwendung von verschieblich angeordneten Sensorelementen die Außenhaut bzw. die Außenkontur des Zylindergehäuses dennoch geschlossen bleibt.

Gelöst wird diese Aufgabe erfindungsgemäß mit den Merkmalen des Patentanspruchs 1.

Die Kanäle für die Sensorelemente sind entlang der Außenhaut des Zylindergehäuseprofils nach außen entlang des Verschiebeweges offen. Diese offenen Kanäle werden dabei jedoch durch durchsichtige Bänder derart abgedeckt, daß zum einen eine geschlossene Außenhaut des Zylindergehäuseprofiles entsteht, und zum anderen die Position der stirnseitig eingeschobenen Sensoren nunmehr sichtbar ist. Die Kanäle sind, bezogen auf die zu verwendenden Sensoren, im Durchmesser derart ausgebildet, daß das einzubringende Abdeckband selbst als Klemmmittel zum Fixieren der Sensorelemente dient. Das heißt, nachdem das Sensorelement an den gewünschten Schaltpunkt eingeschoben ist, wird das Abdeckband derart von außen herangeführt und teilweise in den nach außen offenen KanaL eingeschoben, daß über Klemmung das Sensorelement fixiert ist.

Vorzugsweise sind die Kanäle jeweils paarweise angeordnet, so daß für jeden Sensor ein Kanal zur Verfügung steht, um beispielsweise die beiden Endpunkte des Kolbenverschiebeweges schaltpunktmäßig erfassen zu können. Sind mehrere Schaltpunkte notwendig, so ist es auch möglich, noch mehrere Kanäle dieser Art innerhalb des Zylindergehäuseprofiles anzuordnen. Mit der Anordnung eines Licht emittierenden Elementes am jeweiligen Sensorelement, kann dann sogar von außen durch die durchsichtige Abdeckung erkannt werden, wann der Kolben den Schaltpunkt erreicht.

Insgesamt ist das bzw. die Sensorelement(e) vor Zerstörung und Verschmutzung geschützt.

Die Erfindung ist in der Zeichnung dargestellt und im nachfolgenden näher erläutert.

Es zeigt:
Figur 1 eine Ausführungsform der Erfindung.
Figur 2 einen Querschnitt

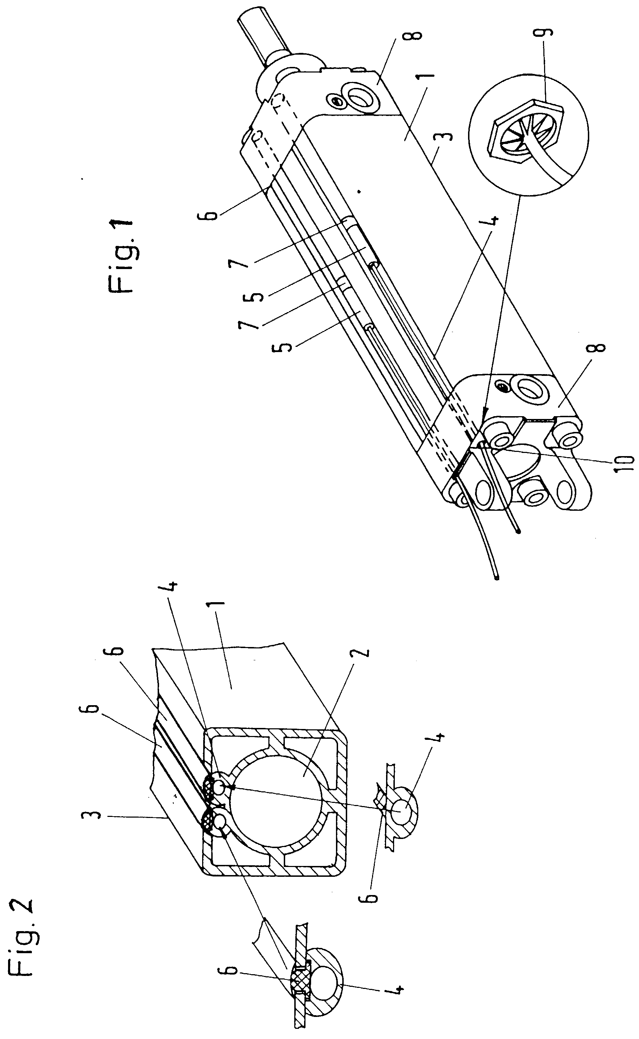

Figur 1 zeigt eine Ausführungsform der Erfindung mit der perspektivischen Darstellung eines druckmittelbetriebenen Arbeitszylinders. Dieser Arbeitszylinder ist hierbei als Kolbenstangenzylinder ausgebildet, wobei die Kolbenstange hier an einer Stirnseite des Arbeitszylinders abgedichtet herausragt. Innerhalb des Zylindergehäuseprofiles 1 ist ein Kolben geführt, welcher mit der Kolbenstange starr verbunden ist und bei entsprechender Druckmittelbeaufschlagung bewegt wird. Das eigentliche Zylindergehäuseprofil 1 ist an den Stirnseiten jeweil5 mit Zylinderdeckeln 8 verschlossen. Die Ausführungsform, wie hier dargestellt, weist keine Zuganker auf, sondern die ZylinderdeckeL 8 sind durch innerhalb des Zylindergehäuseprofiles 1 angebrachte Befestigungsmittel befestigt. Hierbei ist eine mehr oder weniger geschlossene Außenhaut bzw. Außenkontur 3 des Zylindergehäuseprofiles 1 gewählt, die für viele Einsatzfälle von großem Vorteil ist.

Die Kanäle 4 sind entlang, d. h. parallel zum Verschiebeweg durch die Außenhaut des Zylindergehäuseprofiles 1 offen. Diese sind jedoch dann von außen über optisch durchsichtige Pbdeckbänder 6 verschlossen, so daß sich eine geschlossene Außenhaut bzw. Außenkontur ergibt. Ferner sind im montierten Zustand die Kanäle derart verschlossen, daß keine Verschmutzung stattfinden kann, und die Sensorelemente 5 sozusagen mechanisch im Verborgenen liegen. Vorteilhaft ist bei dieser Pusführung, daß die Lage der Sensorelemente 5 von außen direkt optisch erkannt werden kann. In dieser Ausführungsform erweist es sich als vorteilhaft, wenn in erfindungsgemäßer Weise die Sensorelemente noch mit Licht emittierenden Dioden 7 (LED's) versehen sind, wobei man dann das Erreichen der Schaltpunkte durch den Kolben durch ein Aufleuchten von außen erkennen kann. Die stirnseitigen Eingänge 10 sind im Bereich des oder der Zylinderdeckel(s) 8 durch entsprechend ausgebildete Abdeckelemente 9 verschlossen, so daß die Sensorelemente sowie die Kanäle sowohl vor mechanischem als auch verschmutzungsmäßigem Eingriff geschützt sind.

Figur 2 zeigt einen TeiL aus einem Querschnitt durch das Zylindergehäuseprofil 1. Hierbei ist das eigentliche Zylindergehäuseprofil 1 auch einstückig und die Kanäle 4 sind darin entsprechend angeformt. Jedoch sind die Kanäle 4 bezüglich des einstückigen Zylindergehäuseprofiles 1 nach außen parallel zum Kolbenverschiebeweg bzw. parallel zum Zylinderraum 2 nach außen durch die Außenhaut hin offen. Das heißt, im einstückigen Zustand des Zylindergehäuseprofiles 1 ist die Außenhaut 3 desselben durchbrochen. Dafür ist in dieser Ausführungsform jedoch vorgesehen, daß die Kanäle 4 durch von außen durch die Außenhaut eingebrachte Abdeckbänder 6 verschließbar sind, welche optisch durchsichtig sind. Im montierten Zustand ist somit die Außenhaut wieder geschossen. Die Kanäle sind in dieser Schnittdarstellung teilvergrößert, und enthalten zwei mögliche Ausführungsformen hinsichtlich der Ausbildung des Abdeckbandes bzw. deren Fixierung in den Kanälen 4. Bei dieser Ausführungsformen ist es dabei möglich, daß die Einbringung des Abdeckbandes eine auf den Kanalquerschnitt einwirkende Querschnittsveränderung derart hervorruft, daß bei Einbringung des Abdeckbandes das zuvor in den Kanal eingeschobene Sensorelement lagemäßig fixiert wird.

Insgesamt ergibt sich, daß bei einer Aubbildung eines Zylindergehäuseprofiles es möglich ist, Sensorelemente nachzurüsten.

Ferner ergibt sich, daß eine geschlossene Außenhaut des Zylinderrohres bzw. des gesamten Arbeitszylinders entsteht, und die Sensorelemente von außen weder verschmutzen noch mechanisch zerstört werden können.

## Patentansprüche

1. Arbeitszylinder mit einem Zylindergehäuseprofil (1), in welchem ein Kolben längsverschieblich geführt ist, und die Kolbenposition außerhalb des Zylinderraumes über mindestens ein entlang des Kolbenverschiebehubes verschieblich angeordnetes Sensorelement (5) an mindestens einem einstellbaren Schaltpunkt bestimmbar ist,
wobei das Zylindergehäuseprofil (1) zwischen Zylinderraum (2) und der Außenhaut (3) des Zylindergehäuseprofils (1) mindestens einen zum Zylinderraum parallel verlaufenden Kanal (4) enthält, in welchen das Sensorelement (5) stirnseitig einführbar ist,
dadurch gekennzeichnet,
daß die Kanäle (4) entlang der Außenhaut (3) des Zylindergehäuseprofils (1) offen sind, und dort von einem optisch durchsichtigen Abdeckband (6) derart abgedeckt sind, daß sich wiederum eine quasi geschlossene Außenkontur des Zylindergehäuseprofils (1) ergibt, und daß das Abdeckband (6) sowie der bzw. die Kanäle (4) so dimensioniert sind, daß das Abdeckband bei Einbringung in den Kanal das Sensorelement (5) fixiert.

2. Arbeitszylinder nach Anspruch 1,
dadurch gekennzeichnet,
daß zwei Kanäle (4) vorgesehen sind, in welche jeweils ein Sensorelement (5) einschiebbar ist.

3. Arbeitszylinder nach Anspruch 2,
dadurch gekennzeichnet,
daß das Zylindergehäuseprofil (1) aus einem einstückigen Profil besteht, in welchem der Zylinderraum (2) und die Kanäle (4) eingebracht sind.

4. Arbeitszylinder nach Anspruch 3,
dadurch gekennzeichnet,
daß das Sensorelement (5) zusätzlich mit einem Licht emittierenden Element (7) versehen ist, welches dann, wenn der Kolben den Schaltpunkt erreicht, aufleuchtet.

## Claims

1. A working cylinder having a profiled housing cylinder (1) in which a piston is guided in longitudinally displaceable manner, and the piston position outside the cylinder space can be determined by at least one sensor element (5) which is arranged to be displaceable along the displacement stroke of the piston at at least one adjustable switching point, the profiled housing cylinder (1) between the cylinder space (2) and the outer skin (3) of the profiled housing cylinder (1) comprising at least one channel (4) extending parallel to the cylinder space, into which channel the sensor element (5) can be introduced on the end face,
characterised in that
the channels (4) are open along the outer skin (3) of the profiled housing cylinder (1), and are covered there by an optically transparent cover strip (6) such that in turn a virtually closed external contour of the profiled housing cylinder (1) is yielded, and that the cover strip (6) and the channel or channels (4) are dimensioned such that the cover strip locks the sensor element (5) upon introduction into the channel.

2. A working cylinder according to Claim 1,
characterised in that two channels (4) are provided, into each of which a sensor element (5) can be inserted.

3. A working cylinder according to Claim 2,
characterised in that the profiled housing cylinder (1) consists of a one-piece profile in which the cylinder space (2) and the ducts (4) are formed.

4. A working cylinder according to Claim 3,
characterised in that the sensor element (5) is additionally provided with a light-emitting element (7) which then lights up when the piston reaches the switching point.

## Revendications

1. Vérin de travail comportant un profil de carter du vérin (1), dans lequel un piston est guidé de façon longitudinalement déplaçable, et la position du piston à l'extérieur du cylindre peut être déterminée en au moins un point de commutation réglable par l'intermédiaire d'au moins un élément capteur (5) agencé de façon déplaçable le long de la course de déplacement du piston, le profil du carter du vérin (1) comportant, entre le cylindre (2) et l'enveloppe externe (3) du profil du carter du vérin (1), au moins un canal (4) s'étendant parallèlement au cylindre, dans lequel l'élément capteur (5) peut être introduit de façon frontale,
caractérisé en que les canaux (4), le long de l'enveloppe externe (3) du profil du carter du vérin (1), sont ouverts et, là, sont recouverts par une bande de recouvrement (6) optiquement transparente, de sorte que l'on obtient alors un contour externe quasiment fermé du profil du carter du vérin (1), et en ce que la bande de recouvrement (6) ainsi que le ou les canaux (4) sont dimensionnés de sorte que la bande de recouvrement, lors de la mise en place dans le canal, fixe l'élément capteur (5).

2. Vérin de travail selon la revendication 1,
caractérisé en ce que deux canaux (4) sont prévus dans lesquels, à chaque fois, un élément capteur (5) peut être introduit.

3. Vérin de travail selon la revendication 2,
caractérisé en ce que le profil du carter du vérin (1) est constitué d'un profilé en une pièce, dans lequel sont prévus le cylindre (2) et les canaux (4).

4. Vérin de travail selon la revendication 3,
caractérisé en ce que l'élément capteur (5) est muni de plus d'un élément (7) émettant de la lumière, lequel s'allume lorsque le piston atteint le point de commutation.
